# EUROPÄISCHE PATENTANMELDUNG

(11) **EP 3 460 306 A1**
(43) Veröffentlichungstag der Anmeldung: **27.03.2019**
(21) Anmeldenummer: 17192037.4
(22) Anmeldetag: 20.09.2017
(51) Int. Cl.: F16L 23/024, F16L 23/028, F16L 23/032, F16L 47/14

(54) **ROHR MIT VERBINDUNGSFLANSCH**

(71) Anmelder: FiberSol GmbH, 20148 Hamburg (DE)
(72) Erfinder: KNAP, Branko, 6256 KO-ANA (SI)
(74) Vertreter: Glawe, Delfs, Moll

(57) **Zusammenfassung**

Die vorliegende Erfindung betrifft Rohr (13) mit einem in einem Rohrendbereich (15) angeordneten von einer Rohraußenfläche nach außen vorstehenden Kragen (14) und einem im Rohrendbereich (15) positionierbaren, relativ zum Rohr verdrehbaren Verbindungsflansch (16). Der Verbindungsflansch (16) besteht aus einem Material auf Polymerbasis. Zwischen Kragen (14) und Verbindungsflansch (16) ist eine Reibschlussverbindung herstellbar, wobei durch eine auf den Verbindungsflansch (16) ausgeübte Axialkraft eine Klemmverbindung zwischen Verbindungsflansch (16) und Kragen (14) bewirkbar ist und die Klemmkraft eine Komponente in Radialrichtung aufweist. Durch diese Ausgestaltung wird auf einfache Weise eine kompakte und gleichzeitig stabile Flanschverbindung ermöglicht.

## Beschreibung

Die vorliegende Erfindung betrifft ein Rohr mit einem in einem Endbereich des Rohrs angeordneten von einer Rohraußenfläche nach außen vorstehenden Kragen und einem im Rohrendbereich positionierbaren relativ zum Rohr verdrehbaren Verbindungsflansch.

Solche Rohre sind aus dem Stand der Technik bekannt. Der Verbindungsflansch kann so angeordnet werden, dass er in Axialrichtung am Kragen anliegt, um anschließend eine dichte, lösbare Verbindung beispielsweise mit einem zweiten Rohr oder mit der Öffnung eines Behälters herzustellen. Die Öffnung des Behälters bzw. des zweiten Rohrs kann in diesem Falle ein zum Vebindungsflansch passendes Gegenstück aufweisen, welches mit Hilfe eines Befestigungsmittels mit dem Verbindungsflansch verbunden werden kann. Nach Herstellung der Flanschverbindung können dann beispielsweise Flüssigkeiten oder Gase von dem Rohr in den Behälter bzw. in das zweite Rohr geleitet werden.

Bekannt ist es im Stand der Technik weiterhin, den Verbindungflansch relativ zum Rohr verdrehbar auszugestalten. Dies ist insbesondere dann von Vorteil, wenn der Verbindungsflansch und das Gegenstück Durchgangslöcher aufweisen, durch die zur Herstellung der Verbindung Befestigungselemente hindurchgeführt werden können. Die Durchgangslöcher des Verbindungflansches müssen dann zur Herstellung der Verbindung fluchtend über die Durchgangslöcher des Gegenstücks gebracht werden, was durch die Verdrehbarkeit auf einfache Weise ermöglicht wird.

Im Stand der Technik bekannte Flanschverbindungen dieser Art weisen den Nachteil auf, dass sowohl Kragen als auch Verbindungsflansch groß dimensioniert werden müssen bzw. bei vorgegebenem Bauraum aus einem festen Material, insbesondere aus Metall, hergestellt werden müssen, um den auftretenden Kräften gewachsen zu sein. Dies ist insbesondere dann nachteilig, wenn der zur Verfügung stehende Bauraum beschränkt ist. Zudem sind metallische Flanschverbindungen wartungsaufwändig. Vor diesem Hintergrund ist es die Aufgabe der vorliegenden Erfindung ein Rohr der oben genannten Art, ein Verbindungsflanschsystem sowie ein Verfahren zur Herstellung einer Flanschverbindung bereitzustellen, bei der die im Stand der Technik bestehenden Probleme vermieden werden oder zumindest weniger stark auftreten.

Gelöst wird diese Aufgabe durch die Merkmale der Ansprüche 1, 13 und 14. Vorteilhafte Ausführungsformen sind in den Unteransprüchen angegeben. Erfindungsgemäß ist vorgesehen, dass der Verbindungsflansch aus einem Material auf Polymerbasis besteht, wobei zwischen Kragen und Verbindungsflansch eine Reibschlussverbindung herstellbar ist. Zudem ist durch eine auf den Verbindungsflansch ausgeübte Axialkraft eine Klemmverbindung zwischen Verbindungsflansch und Kragen bewirkbar, wobei die Klemmkraft eine Komponente in Radialrichtung aufweist.

Zunächst werden einige im Rahmen der Erfindung verwendete Begriffe erläutert. Der Begriff "Axialkraft" bezeichnet eine Kraft, welche in Axialrichtung des Rohres bzw. entlang der Längsachse des Rohres ausgerichtet ist. Eine Radialrichtung ist senkrecht zur Axialrichtung ausgerichtet.

Erfindungsgemäß ist einerseits eine Reibschlussverbindung zwischen dem Kragen und dem Verbindungsflansch herstellbar, es kommt also zumindest ein Abschnitt des Kragens in reibschlüssigen Kontakt mit zumindest einem Abschnitt des Verbindungsflansches. Zusätzlich wird bei Ausübung einer Axialkraft auf den Verbindungsflansch in Richtung des Rohrendes eine Klemmverbindung mit einer in radialer Richtung ausgerichteten Klemmkraftkomponente zwischen dem Verbindungsflansch und dem Kragen erzeugt. Eine solche Axialkraft kann beispielsweise dadurch bewirkt werden, dass der Verbindungsflansch gegen das Gegenstück gespannt wird. Durch die Axialkraft wird der Verbindungsflansch in Axialrichtung gegen den am Rohrendbereich angeordneten Kragen gedrückt. Die erfindungsgemäße Klemmkraftkomponente in radialer Richtung führt dazu, dass zumindest ein Teil der Axialkraft vom Verbindungsflansch in radialer Richtung in den Kragen und somit in Richtung des Rohres eingeleitet wird. Dadurch wird eine besonders stabile Verbindung zwischen Verbindungsflansch und Kragen und außerdem zwischen Kragen und Rohr erzeugt, zusätzlich kann die oben genannte Reibschlussverbindung durch die radiale Kraftkomponente verstärkt werden.

Der Verbindungsflansch kann zum Spannen gegen ein passendes Gegenstück beispielsweise ein oder mehrere Durchgangslöcher aufweisen, welche bevorzugt in Umfangsrichtung um die Rohrachse herum angeordnet und weiter bevorzugt parallel zur Rohrachse ausgerichtet sind.

Indem der Verbindungsflansch bevorzugt aus einem Material auf Polymerbasis hergestellt ist, kann eine im Vergleich zu metallischen Flanschkomponenten erhöhte Reibungskraft erzeugt werden. Zudem ist ein solcher Verbindungsflansch deutlich wartungsärmer, da er nicht rostet. Weiterhin hat sich gezeigt, dass die Flanschverbindung des erfindungsgemäßen Rohrs bei gleicher mechanischer Stabilität in Axialrichtung eine deutlich geringere Bauhöhe erfordert als vergleichbare Flanschverbindungen des Standes der Technik.

In einer bevorzugten Ausführungsform wirkt ein Außenflächenabschnitt des Kragens mit einem Innenflächenabschnitt des Verbindungsflansches zur Bewirkung der Klemmkraft zusammen. Dazu kann der Innenflächenabschnitt des Verbindungsflansches an den Außenflächenabschnitt des Kragens angepasst sein, insbesondere kann zwischen dem Außenflächenabschnitt des Kragens und dem Innenflächenabschnitt des Verbindungsflansches zur Bewirkung der Klemmkraft ein im Wesentlichen flächiger Kontakt herstellbar sein. Durch einen flächigen Kontakt der Flächenabschnitte kann die Klemmkraft besonders gut übertragen werden.

Vorzugsweise weitet sich der Kragen im Bereich des Außenflächenabschnittes zum Rohrende hin auf. Durch die Aufweitung des Kragens im Bereich der zusammenwirkenden Flächenabschnitte kann die radiale Klemmkraftkomponente auf einfache Weise realisiert werden. Die Aufweitung führt dazu, dass die zusammenwirkenden bzw. für flächigen Kontakt ausgebildeten Flächenabschnitte relativ zur Rohrachse geneigt sind. Dadurch drückt der geneigte Flächenabschnitt des Verbindungsflansches bei axialer Krafteinwirkung (in Richtung des Rohrendbereichs) den damit zusammenwirkenden oder daran anliegenden Flächenabschnitt des Kragens mit einer Kraftkomponente in Radialrichtung zum Rohr hin. Der Neigungswinkel der Flächenabschnitte kann beispielsweise zwischen 10° und 80°, bevorzugt zwischen 15° und 60°, weiter bevorzugt zwischen 20° und 45° liegen.

In einer vorteilhaften Ausführungsform sind der Außenflächenabschnitt und / oder der Innenflächenabschnitt bezüglich der Längsachse des Rohres rotationssymmetrisch ausgebildet. Wenn sowohl der Außenflächenabschnitt, als auch der Innenflächenabschnitt rotationssymmetrisch ausgebildet sind, kann die Kontaktfläche zwischen dem Kragen und dem Verbindungsflansch besonders groß gestaltet werden, wobei gleichzeitig die erfindungsgemäße Klemmverbindung in jeder möglichen Winkelposition des Verbindungsflansches relativ zum Rohr bzw. relativ zum Kragen realisierbar ist. Insbesondere kann die Außenfläche des Kragens eine Kegelstumpfform aufweisen, wobei die Achse der Kegelstumpfform bevorzugt mit der Längsachse des Rohres übereinstimmt. Weiter bevorzugt weist die Innenfläche des Verbindungsflansches eine zur Außenfläche korrespondierende Kegelstumpfform auf, wobei die Achse der Kegelstumpfform bevorzugt mit der Längsachse des Rohres übereinstimmt. Dies führt zu einer gleichmäßigen und symmetrischen radialen Krafteinleitung.

Es kann vorgesehen sein, dass der Verbindungsflansch rohrendseitig nach Herstellung der Klemmverbindung in Axialrichtung mit dem Kragen im Wesentlichen bündig abschließt. Weiterhin kann vorgesehen sein, dass der Kragen und der Verbindungsflansch jeweils eine Endfläche aufweisen, wobei die Endflächen nach Herstellung der Klemmverbindung in einer gemeinsamen Ebene liegen, welche bevorzugt im Wesentlichen senkrecht zur Längsachse des Rohres ausgerichtet ist. Wenn Kragen und Verbindungsflansch zum Rohrende hin bündig abschließen bzw. eine gemeinsame Endfläche bilden, kann auf platzsparende und einfache Weise eine dichte Verbindung mit einem passenden Gegenstück hergestellt werden.

Es kann vorgesehen sein, dass der Kragen einstückig mit dem Rohr ausgebildet ist. Ein entsprechender Kragen kann beispielsweise bei der Herstellung des Rohres im Spritzgussverfahren zusammen hergestellt werden. In einer bevorzugten Ausführungsform ist der Kragen durch eine Klebeverbindung am Rohrendbereich befestigt. Dies bietet den Vorteil, dass bestehende Rohre einfach auf erfindungsgemäße Weise mit erfindungsgemäßem Kragen und Verbindungsflansch nachgerüstet werden können.

Vorteilhafterweise ist der Kragen aus einem Material auf Polymerbasis, insbesondere aus glasfaserverstärktem Kunststoff hergestellt. Von Vorteil ist zudem, wenn das Rohr aus einem Material auf Polymerbasis, insbesondere aus glasfaserverstärktem Kunststoff hergestellt ist. Schließlich ist der Verbindungsflansch vorzugsweise aus einem Material auf Polymerbasis, insbesondere aus glasfaserverstärktem Kunststoff hergestellt. Es hat sich gezeigt, dass glasfaserverstärkter Kunststoff eine ausreichende Festigkeit aufweist, wobei er gleichzeitig langlebig und wartungsarm ist. Zudem kann auf einfache Weise eine Klebeverbindung zwischen dem Kragen und dem Rohr hergestellt werden. Die Verwendung von einem Material auf Polymerbasis bzw. eines glasfaserverstärktem Kunststoffes ist schließlich auch deshalb von Vorteil, da durch dieses Material besonders große Reibungskräfte für die erfindungsgemäße Reibschlussverbindung realisierbar sind.

Das erfindungsgemäße Rohr kann beispielsweise einen Innendurchmesser im Bereich zwischen 25 mm und 800 mm aufweisen. Die Erstreckung des Kragens in Längsrichtung des Rohres sowie die Erstreckung des Verbindungsflansches in Längsrichtung des Rohres können an den Durchmesser des Rohres angepasst sein. Beispielsweise kann die Erstreckung des Kragens in einem Bereich zwischen 40 mm und 150 mm liegen. Die Dicke des Verbindungsflansches kann beispielsweise zwischen 18 mm und 67 mm liegen.

Gegenstand der Erfindung ist weiterhin ein Verbindungsflanschsystem umfassend einen erfindungsgemäßen Kragen zur Anordnung in einem Endbereich eines Rohres und einen erfindungsgemäßen im Rohrendbereich positionierbaren, relativ zum Rohr verdrehbaren Verbindungsflansch. Der Verbindungsflansch besteht aus einem Material auf Polymerbasis, wobei zwischen Kragen und Verbindungsflansch eine Reibschlussverbindung herstellbar ist, wobei durch eine auf den Verbindungsflansch in Richtung des Rohrendbereichs ausgeübte Axialkraft eine Klemmverbindung zwischen Verbindungsflansch und Kragen bewirkbar ist und die Klemmkraft eine Komponente in Radialrichtung aufweist.

Das erfindungsgemäße Verbindungsflanschsystem kann durch die bereits in Verbindung mit dem erfindungsgemäßen Rohr beschriebenen Merkmale fortgebildet werden.

Gegenstand der Erfindung ist schließlich ein Verfahren zur Herstellung einer Flanschverbindung zwischen einem erfindungsgemäßen Rohr und einem zum Verbindungsflansch passenden Gegenstück, umfassend die nachfolgenden Schritte:
a. Bereitstellen des Rohres;
b. Anordnen des Gegenstücks in Axialrichtung neben dem Rohrendbereich;
c. Drehen des Verbindungsflansches um die Längsachse des Rohres zur passenden Ausrichtung des Verbindungsflansches relativ zum Gegenstück;
d. Ausüben einer zum Rohrendbereich ausgerichteten Axialkraft auf den Verbindungsflansch zur Herstellung der Klemmverbindung.

Bevorzugt wird in Schritt d. der Verbindungsflansch gegen das Gegenstück gespannt.

Das erfindungsgemäße Verfahren kann durch die oben in Verbindung mit dem erfindungsgemäßen Rohr beschriebenen Merkmale fortgebildet werden.

Nachfolgend wird ein Ausführungsbeispiel der Erfindung anhand der Zeichnungen beispielhaft erläutert. Darin zeigen:
- Figur 1:: ein erfindungsgemäßes Rohr in einer perspektivischen Schrägansicht vor Herstellung einer Klemmverbindung;
- Figur 2:: die Ansicht der Figur 1 in teilweise geschnittener Darstellung nach Herstellung einer Klemmverbindung;
- Figur 3:: eine seitliche Schnittansicht des erfindungsgemäßen Rohres.

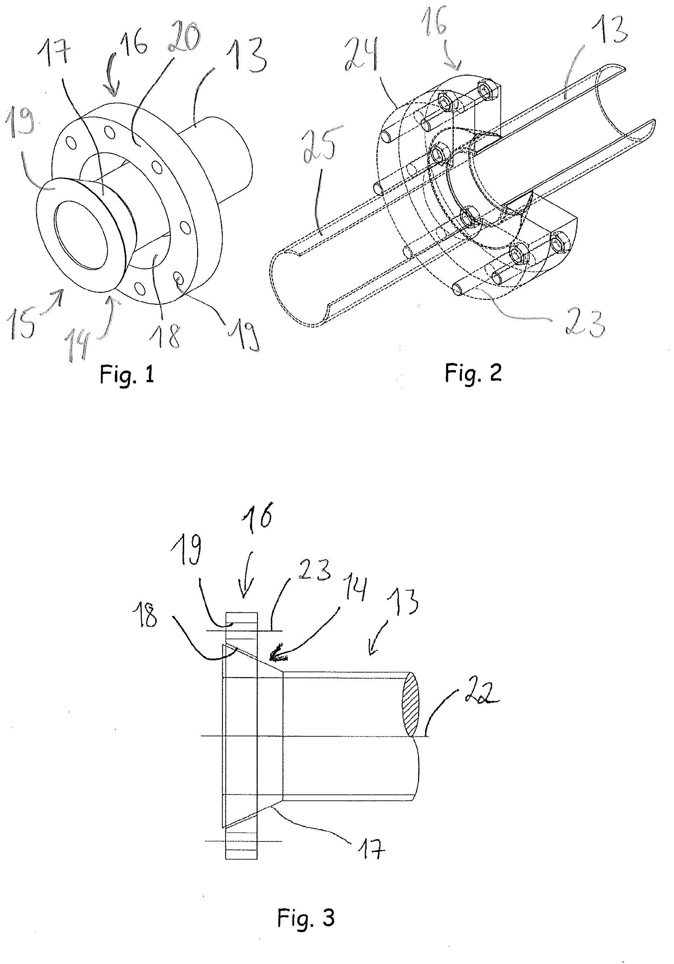

Figur 1 zeigt eine perspektivische Ansicht eines erfindungsgemäßen Rohres 13 mit einem von einer Rohraußenfläche nach außen abragenden Kragen 14, welcher in einem Rohrendbereich 15 des Rohres 13 angeordnet ist. Im Rohrendbereich 15 ist zudem ein Verbindungsflansch 16 angeordnet, welcher relativ zum Rohr sowie relativ zum Kragen 14 um die Axialrichtung des Rohres verdrehbar ist. Das Rohr 13, der Kragen 14, sowie auch der Verbindungsflansch 16 sind aus einem glasfaserverstärktem Kunststoff hergestellt. Der Kragen ist im Endbereich 15 mit Hilfe einer Klebeverbindung an der Außenfläche des Rohres 13 fixiert.

Der Kragen 14 umfasst eine Endfläche 19, welche senkrecht zur Längsachse des Rohres ausgerichtet ist. Der Verbindungsflansch 16 umfasst ebenfalls eine senkrecht zur Längsachse des Rohres 13 ausgerichtete Endfläche 20. Der Verbindungsflansch 16 weist eine Mehrzahl von Durchgangslöchern 19 auf, welche parallel zueinander ausgerichtet sind und welche sich in Axialrichtung des Rohres durch den Verbindungsflansch 16 hindurch erstrecken. Die Durchgangslöcher 19 dienen der Aufnahme von Verbindungselementen (in Figur 1 nicht gezeigt), mit denen der Verbindungsflansch 16 mit einem passenden Gegenstück (in Figur 1 nicht gezeigt) verbunden werden kann.

Der Kragen 14 weitet sich zum Rohrendbereich 15 hin auf und weist eine kegelstumpfförmige Außenfläche 17 auf. Die Außenfläche 17 stellt im Sinne der vorliegenden Erfindung einen Außenflächenabschnitt dar, welcher sich umfänglich um den Kragen 14 herum erstreckt und welcher rotationssymmetrisch zur Längsachse des Rohres ausgebildet ist. Der Verbindungsflansch 16 weist eine Innenfläche 18 auf, welche an die kegelstumpfförmige Außenfläche 17 angepasst ist, so dass die Flächen 17, 18 in flächigen Kontakt zueinander gebracht werden können. Die Innenfläche 18 stellt im Sinne der vorliegenden Erfindung einen Innenflächenabschnitt, welcher rotationssymmetrisch zur Längsachse des Rohres ausgebildet ist. Der Verbindungsflansch 16 ist in Figur 1 vom Ende des Rohres beabstandet. Ausgehend von der in Figur 1 gezeigten Anordnung kann der Verbindungsflansch 16 zur Herstellung einer Reibschluss- und Klemmverbindung mit dem Kragen 14 in axialer Richtung zum Rohrende 15 hin verschoben werden. Dies ist in Figur 2 gezeigt.

Figur 2 zeigt die perspektivische teilweise geschnittene Ansicht der Figur 1 nach einer Verschiebung des Verbindungsflansches 16 in Richtung des Rohrendes 15, wobei zusätzlich ein zum Verbindungsflansch 16 passendes Gegenstück 24 sowie ein mit dem Gegenstück 24 verbundenes weiteres Rohr 25 (in Figur 2 durch gestrichelte Linien angedeutet) in axialer Verlängerung des Rohres 13 neben dem Rohrendbereich 15 angeordnet ist. In Figur 2 ist zu erkennen, dass die Außenfläche 17 und die Innenfläche 18 über den gesamten Umfang miteinander in Kontakt stehen. Dadurch entsteht ein Reibschluss zwischen dem Verbindungflansch 16 und dem Kragen 14. Die Endflächen 19, 20 von Kragen 14 bzw. Verbindungsflansch 16 liegen in der gezeigten Stellung in einer gemeinsamen Ebene, welche senkrecht zur Längsachse des Rohres 13 ausgerichtet ist.

In Figur 2 sind Bolzen 23 durch die Durchgangslöcher 19 und durch korrespondierende Durchgangslöcher im Gegenstück 24 hindurchgeführt. Vor dem Einführen der Bolzen wurde der Verbindungsflansch 16 so relativ zum Rohr 13 um dessen Längsachse verdreht, dass die Durchgangslöcher 19 mit entsprechenden Durchgangslöchern im Gegenstück 24 fluchten. Aufgrund der Rotationssymmetrie der Flächen 17, 18 kann die Klemmverbindung in allen Winkelstellungen des Verbindungsflansches 16 relativ zum Kragen 14 hergestellt werden.

Mit Hilfe von zu den Bolzen 23 passenden Schraubmuttern (nicht gezeigt) kann der Verbindungsflansch 16 dann gegen das Gegenstück 24 gespannt werden. Dabei wird der Verbindungsflansch 16 in axialer Richtung zum Rohrende 15 hin gegen den Kragen 14 gedrückt. Da die in Kontakt stehenden Flächen 17, 18 aufgrund der Kegelstumpfform relativ zur Längsachse des Rohres 13 geneigt sind wird durch die Axialkraft eine Klemmkraft erzeugt, welche eine zum Rohr hin weisende Radialkomponente aufweist. Durch die radiale Klemmkraftkomponente wird der Verbindungsflansch 16 fest auf den Kragen gepresst, so dass eine starke Reibschlusssowie Klemmverbindung entsteht.

Figur 3 zeigt eine seitliche Querschnittsansicht einer zweiten Ausführungsform des erfindungsgemäßen Rohres 13, wobei der Schnitt entlang der Längsachse 22 ausgerichtet ist. Die Elemente dieser Ausführungsform sind mit denselben Bezugszeichen wie bei der ersten Ausführungsform bezeichnet. Die Ausführungsform der Figur 3 stimmt im Wesentlichen mit derjenigen der Figuren 1 und 2 überein. Der einzige Unterschied besteht darin, dass die Erstreckung des Verbindungsflansches 16 in Längsrichtung bei der Ausführungsform der Figur 3 kleiner ist als bei derjenigen der Figuren 1 und 2. Während bei der ersten Ausführungsform die Längserstreckung des Verbindungsflansches 16 im Wesentlichen mit der Längserstreckung des Kragens 14 übereinstimmt, beträgt die Längserstreckung des Verbindungsflansches 16 bei der Ausführungsform der Figur 3 in etwa nur 50 % der Längserstreckung des Kragens 14. Während der Kragen eine Längserstreckung von 56 mm aufweist, beträgt die Dicke des Verbindungsflansches lediglich 23 mm. Der Rohrinnendurchmesser beträgt in der dritten Ausführungsform 100 mm.

Aufgrund der aneinander angepassten Flächen 17, 18 kann der Verbindungsflansch 16 in Axialrichtung über den Kragen 14 geschoben werden, so dass Kragen 14 und Verbindungsflansch 16 in radialer Richtung übereinander angeordnet sind. Das Verbindungsflanschsystem bestehend aus Kragen 14 und Verbindungsflansch 16 weist daher lediglich eine axiale Erstreckung von 56 mm auf (nämlich die axiale Erstreckung des Kragens). Im Stand der Technik war es hingegen üblich, den Verbindungsflansch in axialer Richtung neben dem Kragen anzuordnen. Ein aus dem Stand der Technik bekanntes Verbindungsflanschsystem weist daher in Axialrichtung eine deutlich größere Bauhöhe auf.

## Patentansprüche

1. Rohr, mit einem in einem Rohrendbereich (15) angeordneten von einer Rohraußenfläche nach außen vorstehenden Kragen (14) und einem im Rohrendbereich (15) positionierbaren, relativ zum Rohr verdrehbaren Verbindungsflansch (16), **dadurch gekennzeichnet, dass** der Verbindungsflansch (16) aus einem Material auf Polymerbasis besteht, wobei zwischen Kragen (14) und Verbindungsflansch (16) eine Reibschlussverbindung herstellbar ist, wobei durch eine auf den Verbindungsflansch (16) ausgeübte Axialkraft eine Klemmverbindung zwischen Verbindungsflansch (16) und Kragen (14) bewirkbar ist und die Klemmkraft eine Komponente in Radialrichtung aufweist.

2. Rohr gemäß Anspruch 1, bei dem ein Außenflächenabschnitt (17) des Kragens (14) mit einem Innenflächenabschnitt (18) des Verbindungsflansches (16) zur Bewirkung der Klemmkraft zusammenwirkt.

3. Rohr gemäß Anspruch 2, bei dem sich der Kragen (14) im Bereich des Außenflächenabschnittes (17) zum Rohrende (15) hin aufweitet.

4. Rohr gemäß einem der Ansprüche 2 oder 3, bei dem der Außenflächenabschnitt (17) und / oder der Innenflächenabschnitt (18) bezüglich der Längsachse (22) des Rohres (13) rotationssymmetrisch ausgebildet sind.

5. Rohr gemäß einem der Ansprüche 2 bis 4, bei dem der Außenflächenabschnitt (17) des Kragens (14) eine Kegelstumpfform aufweist, wobei die Achse der Kegelstumpfform bevorzugt mit der Längsachse (22) des Rohres (13) übereinstimmt.

6. Rohr gemäß einem der Ansprüche 1 bis 5, bei dem der Verbindungsflansch (16) nach Herstellung der Klemmverbindung rohrendseitig in Axialrichtung mit dem Kragen (14) im Wesentlichen bündig abschließt.

7. Rohr gemäß einem der Ansprüche 1 bis 6, bei dem der Kragen (14) eine Endfläche (20) und der Verbindungsflansch (16) eine Endfläche (21) aufweisen, wobei die Endflächen (20, 21) nach Herstellung der Klemmverbindung in einer gemeinsamen Ebene liegen, welche bevorzugt im Wesentlichen senkrecht zur Längsachse (22) des Rohres (13) ausgerichtet ist.

8. Rohr gemäß einem der Ansprüche 1 bis 7, bei dem der Kragen (14) einstückig mit dem Rohr (13) ausgebildet ist.

9. Rohr gemäß einem der Ansprüche 1 bis 8, bei dem der Kragen (14) durch eine Klebeverbindung am Rohrendbereich (15) befestigt ist.

10. Rohr gemäß einem der Ansprüche 1 bis 9, bei dem der Kragen (14) aus einem Material auf Polymerbasis, insbesondere aus glasfaserverstärktem Kunststoff ausgebildet ist.

11. Rohr gemäß einem der Ansprüche 1 bis 10, bei dem das Rohr (13) aus einem Material auf Polymerbasis, insbesondere aus glasfaserverstärktem Kunststoff ausgebildet ist.

12. Rohr gemäß einem der Ansprüche 1 bis 11, bei dem der Verbindungsflansch (16) aus glasfaserverstärktem Kunststoff ausgebildet ist.

13. Verbindungsflanschsystem, umfassend einen Kragen (14) zur Anordnung in einem Endbereich (15) eines Rohres (13) und einen im Rohrendbereich (15) positionierbaren, relativ zum Rohr (13) verdrehbaren Verbindungsflansch (16), **dadurch gekennzeichnet, dass** der Verbindungsflansch (16) aus einem Material auf Polymerbasis besteht, wobei zwischen Kragen (14) und Verbindungsflansch (16) eine Reibschlussverbindung herstellbar ist, wobei durch eine auf den Verbindungsflansch (16) ausgeübte Axialkraft eine Klemmverbindung zwischen Verbindungsflansch (16) und Kragen (14) bewirkbar ist und die Klemmkraft eine Komponente in Radialrichtung aufweist.

14. Verfahren zur Herstellung einer Flanschverbindung zwischen einem Rohr (13) gemäß einem der Ansprüche 1 bis 13 und einem zum Verbindungsflansch (16) passenden Gegenstück (24), umfassend die nachfolgenden Schritte:
a. Bereitstellen des Rohres (13) und des Gegenstücks (24) ;
b. Anordnen des Gegenstücks (24) in axialer Verlängerung des Rohres (13) neben dem Rohrendbereich (15) ;
c. Drehen des Verbindungsflansches (16) um die Längsachse des Rohres (13) zur passenden Ausrichtung des Verbindungsflansches (16) relativ zum Gegenstück (24);
d. Ausüben einer zum Rohrendbereich (15) hin gerichteten Axialkraft auf den Verbindungsflansch (16) zur Herstellung der Klemmverbindung.

15. Verfahren gemäß Anspruch 14, bei dem in Schritt d. der Verbindungsflansch (16) gegen das Gegenstück gespannt wird.
